(19) **Europäisches Patentamt / European Patent Office / Office européen des brevets**

(11) **EP 3 986 661 B1**

(12) ## EUROPÄISCHE PATENTSCHRIFT

(45) Veröffentlichungstag und Bekanntmachung des Hinweises auf die Patenterteilung:
**02.08.2023  Patentblatt 2023/31**

(21) Anmeldenummer: **20734461.5**

(22) Anmeldetag: **03.06.2020**

(51) Internationale Patentklassifikation (IPC):
**B23K 26/142** (2014.01)    **B23K 26/38** (2014.01)
**B23K 26/382** (2014.01)    **B23K 26/70** (2014.01)

(52) Gemeinsame Patentklassifikation (CPC):
**B23K 26/142; B23K 26/38; B23K 26/382; B23K 26/702**

(86) Internationale Anmeldenummer:
**PCT/EP2020/000107**

(87) Internationale Veröffentlichungsnummer:
**WO 2020/253980 (24.12.2020 Gazette 2020/52)**

(54) **VERFAHREN ZUM BOHREN ODER SCHNEIDEN DURCH ABTRAGEN VON SCHMELZFÄHIGEM ODER VERDAMPFUNGSFÄHIGEM MATERIAL EINES WERKSTÜCKS**

METHOD FOR BORING OR CUTTING BY REMOVING MELTABLE OR VAPOURISABLE MATERIAL OF A WORKPIECE

PROCÉDÉ DE PERÇAGE OU DE DÉCOUPE PAR ENLÈVEMENT D'UN MATÉRIAU, POUVANT FONDRE OU POUVANT S'ÉVAPORER, D'UNE PIÈCE À USINER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2019  DE 102019004260**

(43) Veröffentlichungstag der Anmeldung:
**27.04.2022  Patentblatt 2022/17**

(73) Patentinhaber: **Fraunhofer-Gesellschaft zur Förderung
der angewandten Forschung e.V.
80686 München (DE)**

(72) Erfinder:
• **PETRING, Dirk**
  **52074 Aachen (DE)**
• **ARNTZ-SCHROEDER, Dennis**
  **52074 Aachen (DE)**

(74) Vertreter: **Grimm, Ekkehard
  Edith-Stein-Strasse 22
  63075 Offenbach/Main (DE)**

(56) Entgegenhaltungen:
DE-A1-102005 049 010    DE-B4-102005 049 010
US-A1- 2008 000 888

**Beschreibung**

Die vorliegende Erfindung betrifft ein Verfahren zum Bohren oder Schneiden durch Abtragen von schmelzfähigem oder verdampfungsfähigem Material eines Werkstücks mittels Absorption von Laserstrahlung gemäß dem Oberbegriff des Anspruchs 1.

Ein derartiges Verfahren ist aus der DE 10 2005 049 010 A1 bekannt.

Bei diesen Verfahren, insbesondere Schneiden und Bohren, ist ein wesentliches Erfordernis darin zu sehen, die von dem Laserstrahl durch Strahlungsabsorption erzeugten, schmelzförmigen Abtragprodukte möglichst effizient und vollständig aus der Abtragzone, d.h. einem Bohrloch, einer Schneidfuge oder einem Schneidschlitz, zu entfernen.

Hierfür wird üblicherweise eine mittels einer oder mehrerer Gasdüse(n) erzeugte Gasströmung eingesetzt, um aufgeschmolzenes und/oder verdampfendes Material aus der Abtragzone auszutreiben.

Die Prozessgasströmung ist durch Reibungs- und Druckkräfte für den Abtransport der Abtragprodukte zuständig. Außerdem können durch die Laserstrahlung auf der Abtragzonenoberfläche erzeugte Dampfdruckgradienten für den Abtransport von Abtragprodukten genutzt werden. Vielfach entstehen jedoch raue Abtragflächen an Schnittflanken und Bohrungswänden, die durch Rückstände aus wieder erstarrter Schmelze entstehen. Auch sind Rückstände von wieder erstarrter Schmelze an den Abtragkanten zu beobachten, die beispielsweise zu einer Bartbildung an der Unterkante von Laserschnittflanken oder zu einer Gratbildung an der Oberkante von Laserbohrungen führen.

Zur Verbesserung der Abtragwirkung sind insbesondere für konventionelle Schneidverfahren, wie zum Beispiel das autogene Brennschneiden, aber auch das Laserstrahlschneiden, Lösungsansätze bekannt.

Die DE 10 2005 049 010 A1 gibt ein Verfahren zum Schneiden von Werkstoffen, bei dem ein Laserstrahl auf ein Werkstück gerichtet wird, der das Werkstückmaterial in einen fluiden Zustand überführt, an. Das fluide Material wird durch einen Schneidstrahl aus einem Gas bzw. einem Gasgemisch ausgetragen. Um das Austragen des Fugenmaterials besonders effektiv zu gestalten, soll das Gas oder Gasgemisch des Schneidstrahls vor dem Auftreffen des Schneidstrahls auf das Werkstück mittels einer Modulationseinrichtung insbesondere periodisch druckmoduliert werden. Das Gas/Gasgemisch kann mittels aus einer Schallquelle stammenden Schallwellen druckmoduliert werden. Es ist auch vorgesehen, dass die Frequenz der aus der Schallquelle stammenden Schallwellen und/oder der der Gasentladung entstammenden Druckwellen derart gewählt ist, insbesondere an die Schnittdicke angepasst, dass in der Schnittfuge Resonanzen erzeugt werden, die die Austragung des Fugenmaterials unterstützen.

Die DE 100 12 792 A1 beschreibt ein Verfahren und eine Vorrichtung zur Bearbeitung von Bauteilen, bei denen durch einen lokalen Energieeintrag eine schmelzflüssige Phase erzeugt wird. Um die Qualität von sich ausbildenden Schweißnähten und Schweißkanten zu verbessern und die Bearbeitungsgeschwindigkeit zu erhöhen, wird vorgeschlagen, das Bauteil oder einen zugeführten Zusatzwerkstoff mit einer Frequenz oberhalb von 15 kHz bis in den Bereich der schmelzflüssigen Phase zu versetzen. Es können Schwingungen mit einer bauteilspezifischen Wellenlänge eingesetzt werden, bei der im Bauteil Interferenz auftritt.

Die DE 100127921A1 beschreibt ein Verfahren zum Bearbeiten von Bauteilen, bei dem durch einen lokalen Energieeintrag eine schmelzflüssige Phase erzeugt wird. Das Bauteil oder ein zugeführter Zusatzwerkstoff wird bis in den Bereich der schmelzflüssigen Phase in Schwingungen mit einer Frequenz von 15 kHz versetzt. Es ist auch angegeben, dass Schwingungen mit einer Bauteil spezifischen Wellenlänge eingesetzt werden sollen, bei der im Bauteil Interferenz auftritt.

Die DD 107226 A1 bezieht sich auf das thermische Trennen mit Schneidstrahl-Ultraschallschwingung. Hierzu wird ein Verfahren zur Verbesserung des Stofftransports oder Stoffumsatzes beim thermischen Trennen von metallischen und nichtmetallischen Werkstoffen, vorzugsweise beim Brennschneiden, Plasmaschneiden, Laserschneiden und Elektronenstrahlschneiden, beschrieben, bei dem der Schneidstrahl bzw. ein Teil des Schneidstrahls in mechanische oder elektrische Schwingungen, vorzugsweise mit einer Frequenz im Ultraschallbereich, versetzt wird. Weiterhin wird eine Vorrichtung zur Durchführung des Verfahrens angegeben.

Die US 2008/0000888 A1 betrifft ein Verfahren zum Trennen von Werkstoffen mit einem Laserstrahl, der von einem eine Schneiddüse mit einer Düseninnenkante aufweisenden Schneidkopf austritt und auf der Schneidfront absorbiert wird, wobei die Achse des Laserstrahls entlang einer Trennlinie mit einer festen Orientierung in Trennrichtung eines Werkstücks relativ zu dem Werkstück bewegt wird. Die Position des Schneidkopfs wird in Bezug auf seinen zeitlichen Mittelwert moduliert oder Laserleistung und Gasdruck werden in der Schneiddüse moduliert.

Der vorliegenden Erfindung liegt die Aufgabe zugrunde, ein verbessertes Verfahren zum Bohren oder Schneiden durch Abtragen von schmelzfähigem oder verdampfungsfähigem Material eines Werkstücks mittels Absorption von Laserstrahlung anzugeben.

Diese Aufgabe wird erfindungsgemäß durch ein Verfahren mit den Merkmalen des Anspruchs 1 gelöst. Vorteilhafte Ausgestaltungen des Verfahrens sind in den abhängigen Ansprüchen angegeben.

Mit dem Verfahren wird aufgeschmolzenes und/oder verdampftes Material des Werkstücks durch eine Gasströmung, vorzugsweise erzeugt mittels einer Gasdüse, aus der Abtragzone, d.h. dem sich bildenden Bohrloch, der sich bildenden Schneidfuge oder dem sich bildenden Schneidschlitz, abtransportiert.

Nach dem erfindungsgemäßen Verfahren werden ein oder mehrere Verfahrensparameter mit der fundamentalen Eigenfrequenz des im Bereich der Abtragzone durch eine Wandung räumlich begrenzten Gasvolumens, mit höheren Harmonischen davon oder mit einer Mischung davon moduliert, um dadurch den Abtransport des Materials aus der sich bildenden Abtragzone zu unterstützen.

Beim Bohren oder Schneiden stellt sich ein räumlich begrenztes Gasvolumen im Bereich der Abtragzone ein. Dadurch neigt die von der durch den Laserstrahl und die Gasströmung hervorgerufene Wandung im Bereich der Abtragzone, die den Querschnitt der sich ausbildenden Bohrung, der sich bildenden Schneidfuge oder des sich bildenden Schlitzes begrenzt, eingeschlossene bzw. begrenzte Gas-, Luft- oder Dampfsäule zu schwachen, resonanten Schallwellen, vergleichbar mit dem Prinzip einer Pfeife. Durch Modulation von Verfahrensparametern mit dieser Resonanzfrequenz ist es möglich, diese Schallwellen und damit ihren Effekt zu verstärken und auf der die Abtragzone begrenzenden Wandung bzw. der auf ihr haftenden Schmelze mit hohem Wirkungsgrad eine gleichfrequente Wellenbildung zu induzieren, die die Austriebswirkung auf die Schmelze deutlich erhöht.

Insbesondere geben die bisherigen Lösungsansätze keine quantitative Handlungsvorschrift zur optimierten Einstellung einer Anregungsfrequenz in Abhängigkeit des räumlich begrenzten Gasvolumens im Bereich der Abtragzone an.

Es hat sich gezeigt, dass die Anwendung des Verfahrens, indem resonante Wellenfrequenzen der Gassäule auf den Schmelzfilm auf der Schneidfront übertragen werden, zu geringen Rautiefen der resultierenden Schnittflanken, insbesondere bei Werkstücken aus metallischen Werkstoffen, wie beispielsweise Edelstahl, führt.

Das erfindungsgemäße Prinzip kann anhand von künstlichen Pfeifen erläutert werden. In künstlichen Pfeifen wird ein Ton prinzipiell dadurch erzeugt, dass ein Luftstrom durch eine scharfe Kante oder ein ähnliches Hindernis gespalten wird, wodurch Wirbel entstehen, die im Zusammenspiel mit einem Resonanzraum die Schallwelle und damit einen Ton entsprechender Frequenz erzeugen, indem Teile der Strömung periodisch abwechselnd in die Strömungskanäle beidseitig der Kante strömt.

Vorzugsweise wird das Verfahren so durchgeführt, dass eine gleichfrequente Wellenbildung auf dem sich bildenden Schmelzfilm induziert wird, der an der Wandung, die die Abtragzone begrenzt, entlang strömt. Hierdurch wird erreicht, dass die Reibungskräfte der Gasströmung auf den Schmelzfilm erhöht werden und der Schmelzaustrieb deutlich effizienter wird. Damit reicht ein geringerer Gasvolumenstrom für einen effektiven Schmelzaustrieb aus, was zu einem geringeren Prozessgasverbrauch bei gleichzeitig verbesserter Bearbeitungsqualität führt.

Nach dem erfindungsgemäßen Verfahren wird ein Verfahrensparameter oder werden mehrere Verfahrensparameter mit der fundamentalen Eigenfrequenz des im Bereich der Abtragzone durch eine Wandung räumlich begrenzten Gasvolumens, mit höheren Harmonischen davon oder mit einer Mischung davon moduliert, um dadurch den Abtransport des Materials aus der sich bildenden Abtragzone zu unterstützen.

Insbesondere werden Eigenschaften des Laserstrahls und/oder des Gasstrahls und/oder der Gasströmung moduliert. Hierfür werden beispielsweise die Leistung, die Position des Fokus und/oder die Intensitätsverteilung des Laserstrahls moduliert. Ebenso können der Gasdruck im Kesselraum der Düse, bei dem es sich um den Ruheraum des Gases oberhalb des sich verjüngenden Düsenkanals handelt, oder geometrische Eigenschaften der Gasdüse moduliert werden.

Entsprechend der Erfindung, für die Erzeugung einer in Richtung einer Dicke d eines Werkstücks durchgängigen Abtragzone, d.h. einer solchen, bei der das Werkstück in Richtung seiner Dicke d von der Oberseite bis zur Unterseite durchtrennt oder durchbohrt wird, wird zur Modulation eine resonante Wellenlänge $\lambda_n$ eingestellt mit

$$\lambda_n = 2\,d\,/\,n, \quad n = 1, 2, 3, \ldots,$$

wobei für die zugehörigen Frequenzen $v_n = c\,/\,\lambda_n = n\,c\,/\,(2\,d)$ gilt; c steht für die Schallgeschwindigkeit. Dieser Ansatz ist vergleichbar mit einer in axialer Richtung beidseitig offenen Pfeife.

Entsprechend der Erfindung, für die Erzeugung einer nicht durchgängigen Abtragzone, d.h. einer solchen, bei der das Werkstück in Richtung seiner Dicke d von der Oberseite nicht bis zur Unterseite durchtrennt oder durchbohrt wird, einer Tiefe t, mit t<d, wird zur Modulation eine resonante Wellenlänge $\lambda_m$ eingestellt mit

$$\lambda_m = 4\,t\,/\,m, \quad m = 1, 2, 3, \ldots,$$

wobei für die zugehörigen Frequenzen $v_m = c\,/\,\lambda_m = m\,c\,/\,(4\,t)$ gilt; c steht für die Schallgeschwindigkeit. Dieser Ansatz ist vergleichbar mit einer in axialer Richtung einseitig offenen Pfeife.

Dies sind Vorschriften für die Frequenzwahl in Abhängigkeit der Abtragtiefe und der Schallgeschwindigkeit.

Für die Schallgeschwindigkeit kann erfahrungsgemäß insbesondere beim Schneiden in guter Näherung die Schallgeschwindigkeit in dem benutzten Gas (z.B. Stickstoff, Argon, Luft, Sauerstoff, Helium oder Gemische davon) bei Raumtemperatur angenommen werden. Die Schallgeschwindigkeit berechnet sich aus der Wurzel von (Adiabatenexponent*universelle Gaskonstante*Temperatur/molare Masse). Die für die Schallgeschwindigkeit maßgebliche Temperatur kann noch genauer durch Simulationsrechnungen oder messtechnisch ermittelt werden. Eine Feinabstimmung der Anregungsfrequenz gegenüber dem so geschätzten Ausgangswert ist von Vorteil und kann anhand einer entsprechenden Durchstimmung des/der Verfahrensparameter und durch Ermittlung der Resonanz anhand der akustischen und/oder optischen und/oder thermischen Prozessemissionen erfolgen.

Es ist auch eine zeitliche und räumliche Modulierbarkeit von Laserstrahlparametern, insbesondere der Leistung und der Leistungsdichteverteilung, oder der Position des Laserstrahlfokus, mit den vorstehend genannten Resonanzfrequenzen vorgesehen, um dadurch eine resonante Schwingung der Gassäule im Abtragvolumen zu verstärken.

Natürlich kann auch eine mechanische Schwingungsanregung des Werkzeugs (hier insbesondere der beteiligten Düsenkörper oder laserstrahlerzeugenden, -führenden und/oder -formenden Elemente) durch schall- bzw. ultraschallgebende Elemente, wie Sonotroden oder Piezoelemente, zur Modulation der resultierenden Verfahrensparameter genutzt werden.

Eine vorteilhafte Maßnahme ist diejenige, die Gasströmung in oder an einer Düse zu erzeugen und zu modulieren. Eine solche Modulation der Gasströmung wird insbesondere im oder am Austritt der Düse erzeugt oder es wird ein die Gasströmung spaltendes Element oder es werden mehrere die Gasströmung spaltende Elemente eingesetzt. Auch ist vorgesehen, einen Resonanzraum oder mehrere Resonanzräume (die gegebenenfalls variabel aufgebaut sind) und/oder den Raum zwischen Düse und Werkstück einzusetzen, der/die die erforderliche Resonanzfrequenz oder Resonanzfrequenzmischung aufweist/aufweisen. Solche Resonanzräume können variabel gestaltet werden, indem manuell, pneumatisch, hydraulisch oder motorisch verschiebbare, den Resonanzraum begrenzende Stempel oder Wände oder einfach der Düsenabstand vom Werkstück variiert werden, um dadurch die Eigenfrequenz des Resonanzraums an die Eigenfrequenz der Gas-, Luft- oder Dampfsäule im Abtragvolumen anzupassen.

Es ist ersichtlich, dass gemäß der Erfindung eine resonante Anregung und Verstärkung der beschriebenen Wellen am Abtragort eingesetzt werden.

Auch sieht die Erfindung vor, den Spalt zwischen der die Düsenmündung umgebenden Unterseite der Düse und der Werkstückoberfläche bzw. der Eintrittskante der zu erzeugenden Abtraggeometrie (Fuge, Bohrung) als Resonanzraum auszubilden, in dem die Kontur und/oder die Ausdehnung der Düsenunterseite entsprechend gestaltet und der Düsenabstand entsprechend eingestellt werden.

Zur Kompensation von geometrischen Variationen der Abtragzone, die z.B. bei sukzessiver Vergrößerung der Bohrtiefe entstehen, und von die Schallgeschwindigkeit beeinflussenden Faktoren, wie der Gastemperatur, wird eine Feinregelung der Frequenz der anregenden Schwingung vorgesehen, indem die Frequenz auf das maximale Resonanzverhalten der Gassäule geregelt wird. Eine solche Regelung kann dadurch vorgenommen werden, dass die Modulation abhängig von Prozess-Signalen aus der Abtragzone auf eine maximale oder vordefinierte Signalantwort geregelt wird, wodurch die Stabilität und/oder die Effizienz des Prozesses und/oder die Qualität des Abtragergebnisses gefördert wird/werden.

Bevorzugt wird eine Modulation abhängig von thermischen und/oder optischen und/oder akustischen Prozess-Signalen geregelt, indem geeignete Sensoren im oder am Bearbeitungskopf und/oder in der Laserstrahlführung zwischen Bearbeitungskopf und Laserstrahlquelle und/oder in der Laserstrahlquelle die Signalantwort detektieren. Insbesondere wird, abhängig von den Eigenschaften der Prozess-Signale, wie z.B. Amplitude, Phase oder Frequenzspektrum, die Modulationsfrequenz, aber beispielsweise auch die Modulationsamplitude, der/des Verfahrensparameter/s angepasst. In bestimmten Ausführungsformen des Verfahrens wird die gute zeitliche und räumliche Modulierbarkeit von Laserstrahlparametern, insbesondere der Leistung oder Leistungsdichteverteilung oder der Position des Laserstrahlfokus, mit den vorstehend angegebenen Resonanzfrequenzen genutzt, um dadurch die resonante Schwingung der Gassäule und deren Wirkung auf den Schmelzfilm besonders effizient zu verstärken.

Weiterhin können Maßnahmen zur Schwingungsanregung des Werkstücks oder des Werkzeugs, insbesondere der eingesetzten Düsenkörper, oder von Laserstrahl erzeugenden, führenden und/oder formenden Elementen, vorgenommen werden. Es können schall- bzw. ultraschallgebende Elemente, wie Sonotroden oder Piezoelemente, eingesetzt werden. In einer weiteren, besonders bevorzugten Maßnahme wird direkt die Gasströmung im oder am Austritt der Schneidgasdüse genutzt, um durch Integration oder Bildung eines oder mehrerer die Gasströmung spaltenden Elemente und eines oder mehrerer die erforderliche Resonanzfrequenz aufweisender Resonanzräume, die auch variabel gestaltet werden können, eine resonante Anregung und Verstärkung der Wellen am Abtragort zu erreichen. Zur Bildung einer derartigen, geeignet variierbaren Konfiguration ist auch die Nutzung des Spalts zwischen Düsenmündung und Werkstückoberfläche bzw. Eintrittskante der zu erzeugenden Abtraggeometrie (Fuge, Bohrung) vorgesehen.

In einer weiteren Ausgestaltung des Verfahrens wird eine Feinregelung der Frequenz der anregenden Schwingung zur Kompensation von geometrischen Variationen der Abtragzone, wie zum Beispiel bei sukzessiver Vergrößerung der Bohrtiefe, und von die Schallgeschwindigkeit beeinflussenden Faktoren, wie die Gastemperatur, vorgenommen, indem die Frequenz auf das maximale Resonanzverhalten der Gassäule geregelt wird. Zusätzlich kann die Amplitude der anregenden Schwingung an charakteristische Prozess-Signale, zum Beispiel thermische oder optische Prozess-Signale, angepasst werden. Mit solchen Maßnahmen kann die Stärke der Wirkung auf den Austrieb des Abtragvolumens verändert und eingestellt werden.

Das erfindungsgemäße Verfahren nutzt unter anderem auch ein begrenztes Abtraggebiet als Resonanzraum für Schallwellen, insbesondere Ultraschallwellen, die durch zusätzliche Maßnahmen resonant verstärkt werden. Hierdurch wird eine direktere und effiziente Übertragung derartiger Wellen, nämlich eine resonante Übertragung, auf die in der Abtragzone befindliche Schmelze, verglichen mit herkömmlichen Maßnahmen, erreicht.

Weitere Einzelheiten und Merkmale der Erfindung ergeben sich aus der nachfolgenden Beschreibung von Ausführungsbeispielen anhand der Zeichnung. In der Zeichnung zeigen:

Figur 1A    in einer schematischen Schnittdarstellung die Erzeugung eines Schneidschlitzes, d. h. einer nicht durchgängigen Abtragzone, mittels Laserstrahlung,

Figur 1B    die Darstellung der Figur 1A in einem Schnitt senkrecht zur Vorschubrichtung der Laserstrahlung,

Figur 2A    in einer schematischen Schnittdarstellung die Erzeugung einer Schneidfuge, d.h. einer durchgängigen Abtragzone, mittels Laserstrahlung,

Figur 2B    die Darstellung der Figur 2A in einem Schnitt senkrecht zur Vorschubrichtung der Laserstrahlung,

Figur 3    in einer schematischen Schnittdarstellung die Erzeugung einer Sacklochbohrung, d. h. einer nicht durchgängigen Abtragzone, mittels Laserstrahlung,

Figur 4    in einer schematischen Schnittdarstellung die Erzeugung einer Bohrung, d.h. einer durchgängigen Abtragzone, mittels Laserstrahlung

Figur 5A    eine Gasdüse in einer Schnittdarstellung, die zur Durchführung des Verfahrens gemäß der Erfindung einsetzbar ist,

Figur 5B    in einer vergrößerten Darstellung das Detail A in Figur 5A,

Figur 6A    eine weitere Gasdüse in einer Darstellung vergleichbar mit derjenigen der Figur 5A, jedoch mit einem veränderbaren Resonanzraum,

Figur 6B    in einer vergrößerten Darstellung das Detail A in Figur 6A,

Figur 7A    eine weitere Gasdüse in einer Darstellung vergleichbar mit derjenigen der Figuren 6A, mit einem veränderbaren Resonanzraum,

Figur 7B    in einer vergrößerten Darstellung das Detail A in Figur 7A, und

Figuren 8    eine Ausführungsform der Gasdüse, vergleichbar mit derjenigen der Figuren 1A und 1B, jedoch ohne das die Gasströmung spaltende Element der Figuren 1A und 1B.

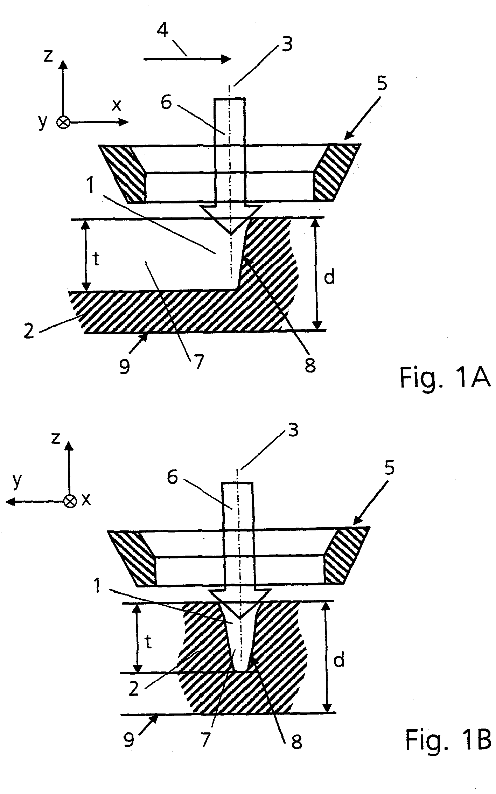

Anhand der Figuren 1A und 1B wird eine erste Ausführungsform des erfindungsgemäßen Verfahrens beschrieben, bei dem ein Schneidschlitz 1, auch als Abtragzone 1 bezeichnet, in einem Werkstück 2 mittels Laserstrahlung, die eine Strahlachse 3 aufweist, erzeugt wird.

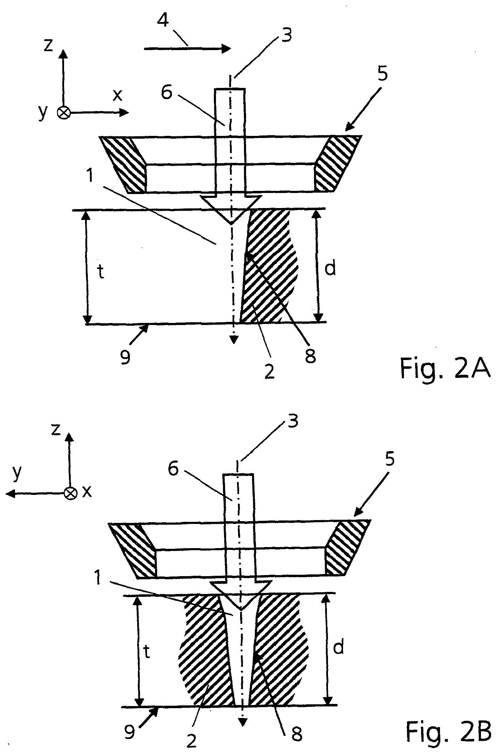

In den Figuren 1 und 2 ist ein rechtwinkliges Koordinatensystem x-y-z angegeben, wobei die z-Achse in Richtung der Strahlachse 3 der Laserstrahlung zeigt, während die x-Achse die Vorschubrichtung 4 der Laserstrahlung bzw. der Strahlachse 3 der Laserstrahlung angibt. Bei der Bearbeitung des Werkstücks 2 wird aufgeschmolzenes und/oder verdampftes Material des Werkstücks 2 durch eine mittels Gasdüse 5 erzeugte Gasströmung 6 aus dem sich bildenden Schneidschlitz 1 abtransportiert.

Während der Ausbildung der Abtragzone, d.h. des Schneidschlitzes 1 der Figuren 1A und 1B, entsteht in dem räumlich begrenzten Gasvolumen eine schwache, akustische Welle, die eine gleichfrequente Wellenbildung auf einem sich bildenden Schmelzfilm, der an der Wandung 8 entlangströmt, induziert.

Für die Erzeugung eines solchen Schneidschlitz, aber auch eines entsprechenden Bohrlochs oder einer entsprechenden Schneidfuge, d.h. einer Abtragzone 1, wird/werden ein oder mehrere Verfahrensparameter mit der fundamentalen Eigenfrequenz des im Bereich der Abtragzone 1 durch eine Wandung, in den Figuren mit dem Bezugszeichen 8 bezeichnet, räumlich begrenzten Gasvolumens, mit höheren Harmonischen davon oder mit einer Mischung davon moduliert, um dadurch den Abtransport des aufgeschmolzenen und/oder verdampften Materials des Werkstücks 2 zu unterstützen, denn hierdurch werden die durch die Gasströmung auf den Schmelzfilm übertragbaren Reibungskräfte erhöht.

Für die Bildung eines Schneidschlitzes 1 entsprechend der Figuren 1A und 1B, d.h. einer nicht bis zur Werkstückunterseite 9 durchgängigen Abtragzone 1 mit einer Tiefe t und einer Dicke d des Werkstücks 2 (t<d), wird zur Modulation des durch die Wandung 8 der Abtragzone 1 begrenzten Gasvolumens eine resonante Wellenlänge $\lambda_m$ eingestellt;mit

$$\lambda_m = 4\,t\,/\,m,\ m=1,\,2,\,3,\ldots$$

Für die zugehörigen Frequenzen $v_m$ gilt $v_m = c / \lambda_m = m\,c\,/\,(4\,t)$, wobei c für die Schallgeschwindigkeit steht.

Während in den Figuren 1A und 1B die Bildung eines Schneidschlitzes, d.h. einer nicht bis zur Werkstückunterseite 9 durchgängigen Abtragzone 1, dargestellt ist, ist in den Figuren 2A und 2B die Bildung einer Schneidfuge, d.h. einer bis zur Werkstückunterseite 9 des Werkstücks 2 der Dicke d durchgängigen Abtragzone 1, dargestellt. Hierfür wird zur Modulation des durch die Wandung 8 der Abtragzone 1 begrenzten Gasvolumens eine resonante Wellenlänge $\lambda_n$ eingestellt mit

$$\lambda_n = 2\,d\,/\,n\,,\ \ n=1,\,2,\,3,\ldots$$

Für die zugehörigen Frequenzen $v_n$ gilt $v_n = c / \lambda_n = n\,c\,/\,(2\,d)$, wobei c für die Schallgeschwindigkeit steht.

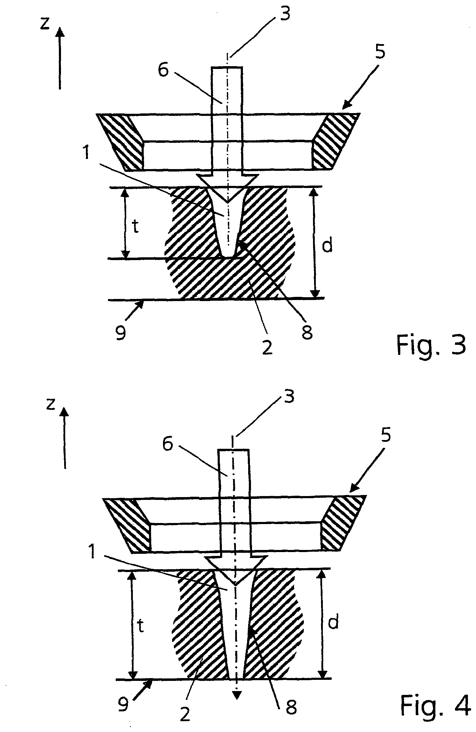

Die schematische Schnittdarstellung, die in Figur 3 gezeigt ist, stellt die Erzeugung einer Sacklochbohrung, d.h. einer nicht durchgängigen Abtragzone 1 durch das Werkstück 2, mittels Laserstrahlung dar, so dass sich die vorstehend angegebenen Vorschriften für die Modulation der Gasströmung, die sich auf die nicht durchgängige Abtragzone beziehen, auch hier anwendbar sind. Der Unterschied zu der Erzeugung eines Schneidschlitzes entsprechend der Figuren 1A und 1B ist derjenige, dass die Laserstrahlachse 3 und die Gasdüse 5 im zeitlichen Mittel, das heißt abgesehen von eventuell genutzten Schwingungen zur Parametermodulation oder Bewegungen zur Formung des Bohrungsquerschnittes, nicht relativ zum Werkstück in x- und/oder y-Richtung bewegt werden.

Entsprechendes gilt für die schematische Schnittdarstellung der Figur 4, die die Erzeugung einer Bohrung, d.h. einer durchgängigen Abtragzone 1 durch das Werkstück 2, mittels Laserstrahlung darstellt, so dass sich die vorstehend angegebenen Vorschriften für die Modulation der Gasströmung, die sich auf die durchgängige Abtragzone 1 beziehen, auch hier anwendbar sind. Der Unterschied zu der Erzeugung einer Schneidfuge entsprechend der Figuren 2A und 2B ist derjenige, dass die Laserstrahlachse 3 und die Gasdüse 5 im zeitlichen Mittel, das heißt abgesehen von eventuell genutzten Schwingungen zur Parametermodulation oder Bewegungen zur Formung des Bohrungsquerschnittes, nicht relativ zum Werkstück in x- und/oder y-Richtung bewegt werden.

In einer besonders vorteilhaften Ausführungsform erfolgt die Modulation der Gasströmung in oder an einer Gasdüse 5, indem die Gasströmung 6 durch ein die Gasströmung 6 aufspaltendes Element aufgespalten wird. Ein Resonanzraum oder Resonanzräume werden, zumindest in einem Teil, in der Gasdüse 5 ausgebildet, und/oder es wird ein Raum zwischen Gasdüse 5 und Werkstück 2 genutzt, um die erforderliche Resonanzfrequenz oder eine entsprechende Resonanzfrequenzmischung zu erhalten.

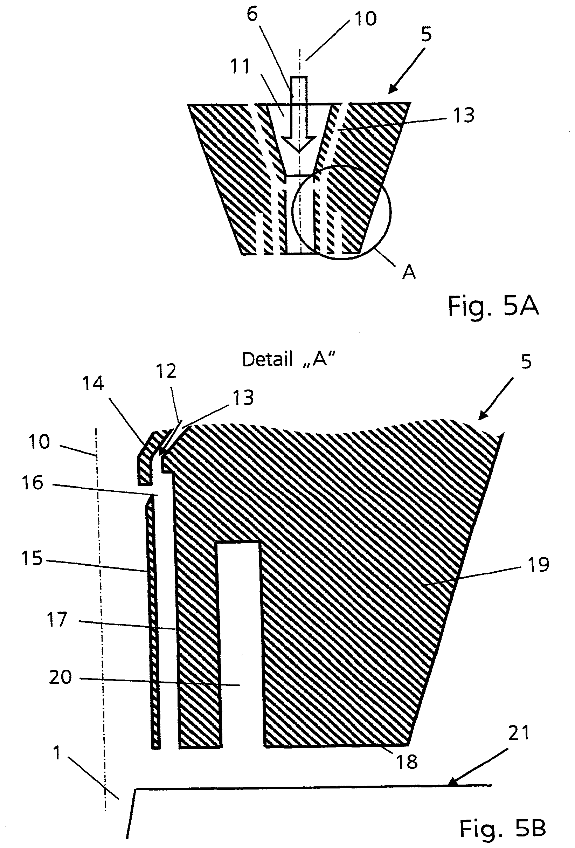

In den Figuren 5 bis 7 sind verschiedene, vorteilhafte Ausgestaltungen einer solchen Gasdüse 5, die die Gasströmung 6 aufspaltet und einen Teil des Resonanzraums zwischen Gasdüse 5 und Werkstück 2 aufweisen, in jeweiligen Schnittdarstellungen, dargestellt.

Die Figuren 5A und 5B zeigen eine erste Variante einer Gasdüse, wobei Figur 5B eine vergrößerte Darstellung des Details A in Figur 5A zeigt.

Die Gasdüse 5, mit einer Achse 10, besitzt einen zentralen Kanal 11. Zusätzlich zur Gasströmung 6, wird optional die Gasströmung 12, angedeutet durch einen Strömungspfeil 12, über einen optionalen Ringraum 13, der von dem zentralen Kanal 11 durch eine optionale, trichterförmige Wand 14 getrennt ist, zugeführt. Die Wand 14 verläuft im Wesentlichen parallel zur ebenfalls in diesem Bereich trichterförmigen, inneren Wand des Düsenkörpers 19.

Der zentrale Kanal 11 besitzt entsprechend eingangsseitig der Gasdüse 5 einen trichterförmigen Querschnitt, der dazu dient, die Gasströmung 6 zu beschleunigen. Die Gasströmung 6 im Kanal 11 und die Gasströmung 12 im Ringraum 13 können dabei aus einem strömungsaufwärts angeordneten, gemeinsamen Kesselraum (nicht eingezeichnet) oder aus strömungsaufwärts angeordneten, getrennten Kesselräumen (nicht eingezeichnet) mit gleichen oder unterschiedlichen Ruhegasdrücken und oder gleichen und/oder unterschiedlichen Gasarten gespeist werden.

Unterhalb des Ringraums 13, in einem Bereich, in dem die Wand 14 endet, befindet sich ein die Gasströmung 6 und/oder 12 spaltendes Element 15, das auf seinem dem Ringraum 13 zugewandten Ende mit einer scharfen Anströmkante 16 ausgestattet ist. An dieser Anströmkante 16 des spaltenden Elements 15 wird die aus dem Kanal 11 austretende Gasströmung 6 und/oder die aus dem Ringraum 13 austretende Gasströmung 12 aufgespalten. Der eine Teil der Gasströmung 6 und/oder 12 wird in Richtung des zentral zylindrisch weiterführenden Kanals 11 geführt, während der andere Teil der Gasströmung 6 und/oder 12 in einen Raum 17 zwischen dem Element 15 und der dort ebenfalls zylindrischen, inneren Wand des Düsenkörpers 19 geleitet wird. Dieser Raum 17 und/oder der zylindrische Teil des zentralen Kanals 11 dienen als Resonanzraum.

Weiterhin befindet sich, von der Unterseite 18 des Düsenkörpers 19 aus gesehen, in dem Düsenkörper 19 ein Hohlraum 20, der einen Teil eines Resonanzraums zwischen der Gasdüse 5 und dem Werkstück 2, von dem in Figur 5B nur dessen Oberfläche 21 dargestellt ist, bildet.

Der Teil der Gasströmung 6 und/oder 12, der auf der Höhe der Unterseite 18 aus dem Kanal 11 und/oder dem Raum 17 ausströmt, tritt zum einen in die Abtragzone 1 ein und wird zum anderen auch dem Raum zwischen Unterseite 18 und der Werkstückoberfläche 21 und gegebenenfalls dem optionalen Hohlraum 20 zugeführt. Auch diese Anordnung bewirkt eine Spaltung der Strömung und die bezeichneten Räume bilden zugehörige Resonanzräume. Insgesamt wird dadurch die Gasströmung zusätzlich zur Schwingung angeregt und damit entsprechend moduliert.

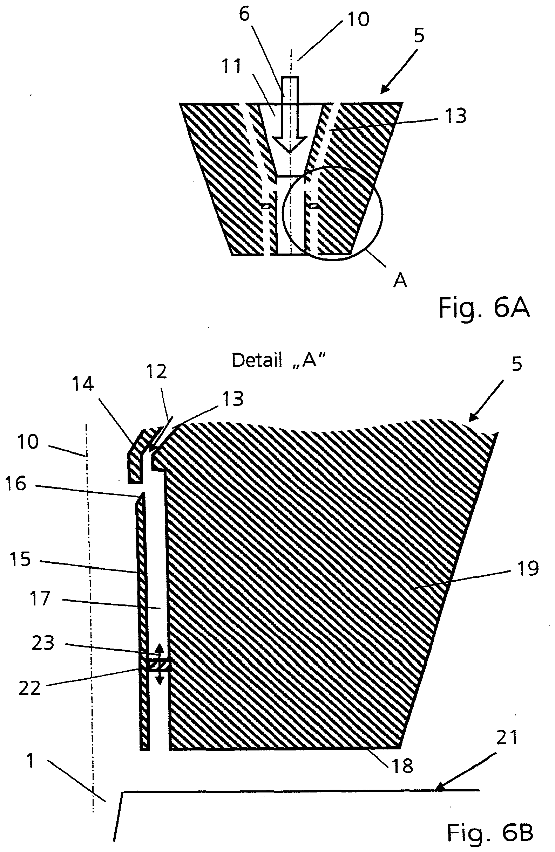

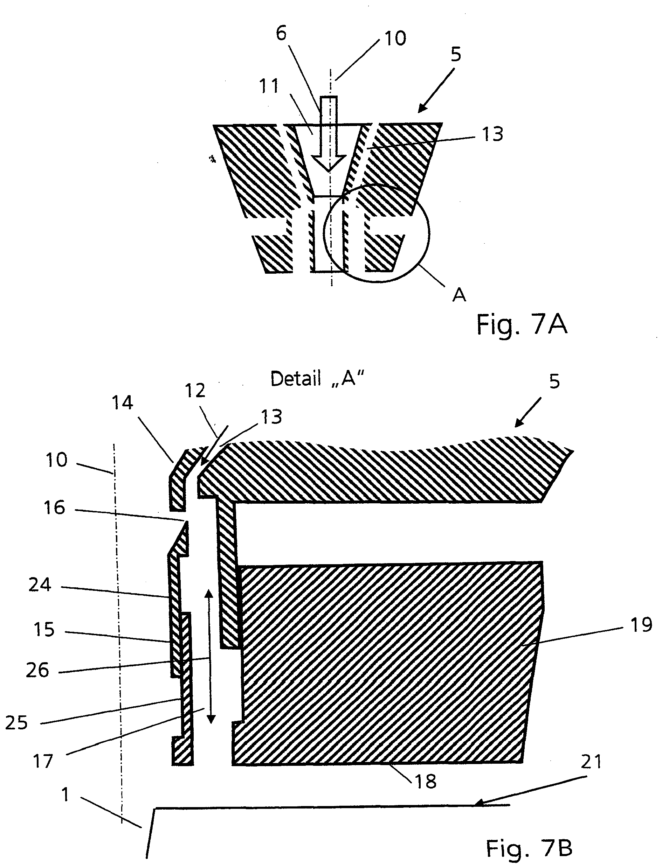

Die Figuren 6A und 6B zeigen eine weitere Ausführungsform einer Gasdüse, die in ihrem Grundaufbau derjenigen entspricht, die in den Figuren 5 dargestellt ist, allerdings ohne den Hohlraum 20. Gegenüber der Ausführungsform der Figuren 5 ist in den Resonanzraum 17 ein über die Länge des Resonanzraums 17 verschiebbares Element 22, angedeutet durch den Doppelpfeil 23, eingesetzt, über dessen Position der Resonanzraum 17 veränderbar ist. Der Aufbau dieser Gasdüse 5 ermöglicht, die Eigenfrequenz des Resonanzraumes 17 auf die Resonanzfrequenz des räumlich begrenzten Gasvolumens in der Abtragzone einzustellen oder abzustimmen. Die Ausführungsform der Gasdüse 5 entsprechend der Figuren 7A und 7B weist, ebenso wie die Ausführungsform der Figuren 6, einen in der Länge veränderbaren Resonanzraum, der ebenfalls mit dem Bezugszeichen 17 bezeichnet ist, auf, indem das spaltende Element 15 in der Länge in ein erstes Teil 24 und ein zweites Teil 25 unterteilt ist, die gegeneinander teleskopartig verschiebbar sind, und weiterhin zumindest ein Teil des Düsenkörpers 19, der sich auf der dem spaltenden Element 15 gegenüberliegenden Seite befindet, in Richtung des Doppelpfeils 26 verschiebbar ist, um dadurch den Resonanzraum 17, in Richtung des Doppelpfeils 26, zu verlängern oder zu verkürzen und entsprechend einzustellen oder abzustimmen. Mit der hier gewählten Anordnung wird gleichzeitig die Länge des zum spaltenden Element 15 parallelen, zylindrischen Teils des zentralen Düsenkanals 11 als Resonanzraum abstimmbar.

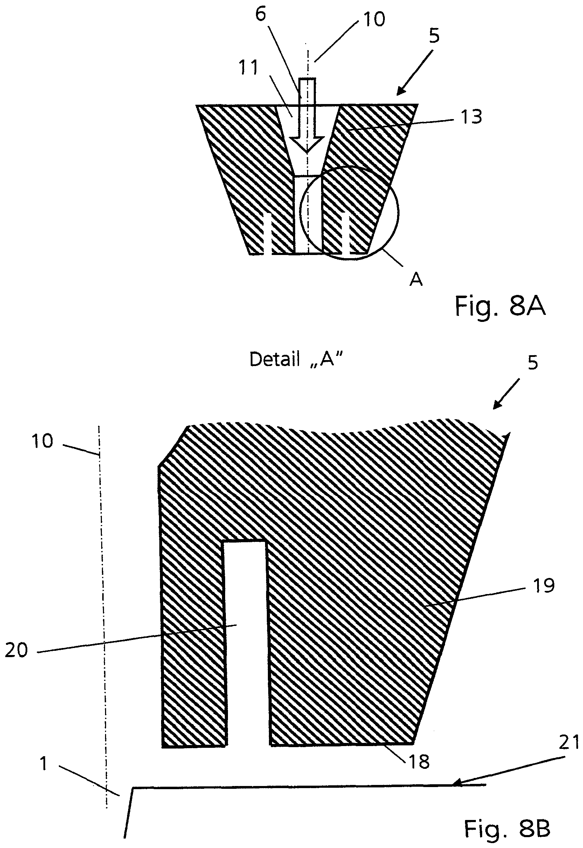

Die Ausführungsform, die in den Figuren 8A und 8B gezeigt ist, entspricht derjenigen der Figuren 5, jedoch ohne das die Gasströmung 6 spaltende Element 15 und ohne die den Ringraum 13, bildende Wand 14. Hierdurch vereinfacht sich der Düsenaufbau erheblich, wobei lediglich der Resonanzraum 20 zur Modulation der Gasströmung genutzt wird.

Die Ausführungsformen der Gasdüse 5 der Figuren 5 bis 7, die das spaltende Element 15 und die den Ringraum bildende Wand 14 einsetzen, haben, verglichen mit der Ausführungsform der Figur 8, den Vorteil, dass der die Gasströmung modulierende Resonanzraum direkter mit der Hauptgasströmung 6 gekoppelt ist und damit eine effizientere Anregung oder Verstärkung der Resonanzfrequenz in der Abtragzone erfolgt. Außerdem wird ausdrücklich darauf hingewiesen, dass die rotationssymmetrisch dargestellten Ausführungsformen der Düsen natürlich auf viele andere, nicht rotationssymmetrische Geometrien, z.B. durch Nutzung symmetrisch oder unsymmetrisch angeordneter, außeraxialer Einzelbohrungen anstelle von Ringspalten oder Ringnuten, übertragen werden können.

## Patentansprüche

1. Verfahren zum Bohren oder Schneiden durch Abtragen von schmelzfähigem oder verdampfungsfähigem Material eines Werkstücks mittels Absorption von Laserstrahlung, wobei aufgeschmolzenes und/oder verdampftes Material durch eine Gasströmung aus dem sich bildenden Bohrloch, der sich bildenden Schneidfuge oder dem sich bildenden Schneidschlitz, definiert als Abtragzone, abtransportiert wird, wobei ein oder mehrere Verfahrensparameter mit der fundamentalen Eigenfrequenz des im Bereich der Abtragzone durch eine sich bildende Wandung räumlich begrenzten Gasvolumens, mit höheren Harmonischen davon oder mit einer Mischung davon moduliert werden, um dadurch den Abtransport des Materials aus der sich bildenden Abtragzone zu unterstützen, **dadurch gekennzeichnet, dass** bei der Erzeugung einer nicht durchgängigen Abtragzone einer Tiefe t in einem Werkstück einer Dicke d, mit t<d, zur Modulation eine resonante Wellenlänge $\lambda_m$ eingestellt wird mit

$$\lambda_m = 4\,t\,/\,m\,,\quad m=1,\,2,\,3,\ldots$$

wobei für die zugehörigen Frequenzen $v_m$ gilt

$$v_m = c\,/\,\lambda_m = m\,c\,/\,(4\,t)$$

mit der Schallgeschwindigkeit c und dass bei der Erzeugung einer in Richtung einer Dicke d des Werkstücks durchgängigen Abtragzone zur Modulation eine resonante Wellenlänge $\lambda_n$ eingestellt wird mit

$$\lambda_n = 2\,d\,/\,n\,,\quad n=1,\,2,\,3,\ldots$$

wobei für die zugehörigen Frequenzen $v_n$ gilt

$$v_n = c\,/\,\lambda_n = n\,c\,/\,(2\,d)$$

mit der Schallgeschwindigkeit c.

2. Verfahren nach Anspruch 1, **dadurch gekennzeichnet, dass** eine gleichfrequente Wellenbildung auf einem sich bildenden Schmelzfilm induziert wird, der an der Wandung entlangströmt.

3. Verfahren nach Anspruch 1 oder 2, **dadurch gekennzeichnet, dass** als Verfahrensparameter Eigenschaften des Laserstrahls und/oder der Gasströmung moduliert werden.

4. Verfahren nach einem der Ansprüche 1 bis 3, **dadurch gekennzeichnet, dass** die Gasströmung in oder an einer Düse erzeugt und moduliert wird, indem die Modulation der Gasströmung durch ein oder mehrere die Gasströmung spaltende(s) Element(e) und einen Resonanzraum oder mehrere Resonanzräume und/oder einen sich bildenden Raum zwischen Düse und Werkstück, der/die die erforderliche Resonanzfrequenz oder Resonanzfrequenzmischung aufweist/aufweisen, erfolgt.

5. Verfahren nach einem der Ansprüche 1 bis 4, **dadurch gekennzeichnet, dass** die Modulation abhängig von Prozess-Signalen aus der Abtragzone auf eine maximale oder vordefinierte Signalantwort geregelt wird.

6. Verfahren nach Anspruch 5, **dadurch gekennzeichnet, dass** die Modulation abhängig von thermischen oder optischen oder akustischen Prozess-Signalen geregelt wird.

**Claims**

1. Method for drilling or cutting by removing fusible or vaporisable material of a workpiece by means of absorption of laser radiation, wherein fused and/or vaporised material is transported away by a gas flow from the bore hole forming, the cutting joint forming or the cutting slot forming, defined as the removal zone, wherein one or more process parameters are modulated with the fundamental natural frequency of the gas volume spatially limited in the region of the ablation zone by a forming wall, with higher harmonics thereof or with a mixture thereof, in order thereby to support the removal of the material from the forming ablation zone, **characterised in that**, in the generation of a noncontinuous ablation zone of a depth t in a workpiece of a thickness d, with t<d, a resonant wavelength $\lambda_m$ is set for modulation with

$$\lambda_m = 4\,t\,/\,m,\ m=1,\,2,\,3,\ldots$$

where the following applies for the associated frequencies $v_m$

$$v_m = c\,/\,\lambda_m = m\,c\,/\,(4\,t)$$

with the speed of sound c
and **in that**, for the generation of a continuous ablation zone in the direction of a thickness d of the workpiece, a resonant wavelength $\lambda_n$ is set for modulation with

$$\lambda_n = 2\,d\,/\,n\,,\quad n=1,\,2,\,3,\ldots$$

where the following applies for the associated frequencies $v_n$

$$v_n = c\,/\,\lambda_n = n\,c\,/\,(2\,d)$$

with the speed of sound c.

2. Method according to claim 1, **characterised in that** a wave formation at the same frequency is induced on a melting film which is forming and flows along the wall.

3. Method according to claim 1 or 2, **characterized in that** properties of the laser beam and/or the gas flow are modulated as process parameters.

4. Method according to any one of claims 1 to 3, **characterized in that** the gas flow is generated and modulated in or at a nozzle by modulating the gas flow by one or more elements splitting the gas flow and one or more resonant cavities and/or a space forming between the nozzle and the workpiece having the required resonant frequency or resonant frequency mixture.

5. Method according to any one of claims 1 to 4, **characterized in that** the modulation is controlled to a maximum or predefined signal response depending on process signals from the ablation zone.

6. Method according to claim 5, **characterised in that** the modulation is controlled as a function of thermal or optical or acoustic process signals.

**Revendications**

1. Procédé de perçage ou de découpe par enlèvement d'un matériau, pouvant fondre ou pouvant s'évaporer, d'une pièce à usiner au moyen de l'absorption d'un rayonnement laser, dans lequel le matériau fondu et/ou vaporisé est évacué par un flux de gaz depuis le trou de perçage se formant, le cordon de découpe se formant ou la fente de découpe se formant, défini(e) en tant que zone d'enlèvement, dans lequel un ou plusieurs paramètres de procédé sont modulés avec la fréquence propre fondamentale du volume de gaz délimité spatialement dans la région de la zone d'enlèvement par une paroi se formant, avec des harmoniques plus élevées de celle-ci ou avec un mélange de celles-ci pour ainsi soutenir l'évacuation du matériau hors de la zone d'enlèvement se formant, **caractérisé en ce que** lors de la création d'une zone d'enlèvement non continue d'une profondeur t dans une pièce à usiner d'une épaisseur d, avec t < d, une longueur d'onde $\lambda_m$ résonante est réglée pour la modulation avec

$$\lambda_m = 4\,t\,/\,m,\ m = 1, 2, 3, \dots$$

dans lequel pour les fréquences correspondantes $v_m$ s'applique

$$v_m = c\,/\,\lambda_m = m\,c\,/\,(4\,t)$$

avec la vitesse sonique c et
**en ce que** lors de la création d'une zone d'enlèvement continue dans la direction d'une épaisseur d de la pièce à usiner, une longueur d'onde $\lambda_n$ résonante est réglée pour la modulation avec

$$\lambda_n = 2\,d\,/\,n,\ n = 1, 2, 3, \dots$$

dans lequel pour les fréquences correspondantes $v_n$ s'applique

$$v_n = c\,/\,\lambda_n = n\,c\,/\,(2\,d)$$

avec la vitesse sonique c.

2. Procédé selon la revendication 1, **caractérisé en ce qu'**une formation d'ondes de même fréquence est induite sur un film fondu se formant qui s'écoule le long de la paroi.

3. Procédé selon la revendication 1 ou 2, **caractérisé en ce que** des propriétés du rayon laser et/ou du flux de gaz sont modulées en tant que paramètres de procédé.

4. Procédé selon l'une des revendications 1 à 3, **caractérisé en ce que** le flux de gaz est créé et modulé dans ou au niveau d'une buse, **en ce que** la modulation du flux de gaz s'effectue par un ou plusieurs élément(s) divisant le flux de gaz et un espace de résonance ou plusieurs espaces de résonance et/ou un espace se formant entre la buse et la pièce à usiner, qui présente/présentent la fréquence de résonance ou la combinaison de fréquences de résonance requises.

5. Procédé selon l'une des revendications 1 à 4, **caractérisé en ce que** la modulation est réglée, en fonction de signaux de processus depuis la zone d'enlèvement, sur une réponse à un signal maximale ou prédéfinie.

6. Procédé selon la revendication 5, **caractérisé en ce que** la modulation est réglée en fonction de signaux de processus thermiques ou optiques ou acoustiques.

Fig. 1A

Fig. 1B

Fig. 2A

Fig. 2B

Fig. 3

Fig. 4

Fig. 5A

Detail „A"

Fig. 5B

Fig. 6A

Detail „A"

Fig. 6B

Fig. 7A

Detail „A"

Fig. 7B

6
10
5
11
13

Fig. 8A

Detail „A"

5
10
19
20
1
18
21

Fig. 8B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005049010 A1
- DE 10012792 A1
- DE 100127921 A1
- DD 107226 A1
- US 20080000888 A1